# EUROPÄISCHE PATENTSCHRIFT

(11) **EP 3 472 462 B1**
(45) Veröffentlichungstag und Bekanntmachung des Hinweises auf die Patenterteilung: **16.12.2020**
(21) Anmeldenummer: 17725159.2
(22) Anmeldetag: 28.04.2017
(51) Int. Cl.: F03D 80/60

(54) **MODULAR AUFGEBAUTE WINDENERGIEANLAGE**
MODULAR WIND TURBINE
EOLIENNE À STRUCTURE MODULAIRE

(30) Priorität: 21.06.2016 DE 102016111332
(43) Veröffentlichungstag der Anmeldung: 24.04.2019
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2017/100356
(87) Internationale Veröffentlichungsnummer: WO 2017/220068

(56) Entgegenhaltungen:
- EP-A1- 2 853 732
- WO-A2-2011/083156
- DE-A1-102014 109 212
- JP-A- 2013 172 535
- US-A- 4 527 072

## Beschreibung

Die Erfindung betrifft eine Windenergieanlage mit einem Turm, einem Triebstrang, der einen Rotor, ein Rotorlager, gegebenenfalls ein Getriebe und einen Generator aufweist, einem sich mit seiner Längsachse quer zur Längsachse des Turms erstreckenden, den Triebstrang auf seiner einen Seite abschnittsweise aufnehmenden Zylinder, und einer den Zylinder auf seiner anderen Seite verschließenden Haube.

Eine derartige Windenergieanlage ist beispielsweise aus der US 4,527,072 A bekannt, wobei die dieser Konstruktion zugrunde liegende Idee darin besteht, die für Reparaturen notwendigen Stillstandzeiten mittels eines modularen Aufbaus und einer einfachen Befestigungsmöglichkeit der Triebstrangkomponenten am Turm und der damit einhergehenden einfachen Austauschbarkeit zu reduzieren.

Nachteilig erscheint jedoch der Umstand, dass der Triebstrang der Anlage aufgrund dieser Konstruktion erst bei der Endmontage fertiggestellt und auch dessen Funktionalität erst nach der Errichtung der Anlage überprüft werden kann. Weiter ist nach diesem Stand der Technik lediglich eine passive Kühlung des Triebstrangs vorgesehen, die für moderne Anlagen nicht ausreichend ist.

Üblicherweise sind Windenergieanlagen jedoch in aufgelöster Bauweise ausgeführt, wobei die Hauptkomponenten wie Rotorlagerung, Getriebe, Kupplung und Generator hintereinander auf einen darunter angeordneten Maschinenträger angeordnet sind. Am Maschinenträger sind dann wiederum das Vertikaldrehlager mit Antrieben und Bremsen angeordnet. Bei direktgetriebenen Generatoren ohne Getriebe ist der Maschinenträger fest mit dem Generatorstator verbunden und hinter dem Generator angeordnet. Die Zusatzaggregate, wie z. B. die Schmieranlage, die Kühlung und die elektrische Ausrüstung sind dann auf oder an dem Maschinenträger angebracht und üblicher Weise durch eine Verkleidung vor den äußeren Witterungseinflüssen geschützt. Ein Bespiel für diesen Aufbau gibt die EP 0 821 161 B1 wieder.

Es gibt jedoch auch Triebstrangaufbauten, die die Komponenten integrieren und die Gehäuse von Getriebe und Generator zur Lastübertagung nutzen. Dabei kann dieser Triebstrang an einem Kopfträger befestigt werden, der die Rotorlasten dann über das Vertikallager in den Turm einleitet. Ein Beispiel ist in WO 2008/113 318 A2 zu sehen. Zugunsten der grundsätzlich kompakten Bauweise müssen die erforderlichen Kühlerelemente außerhalb des Kopfträgers angeordnet und mit einer Tragstruktur an den Kopfträger angebunden werden.

In einer weiteren Anordnung sind das Getriebe und der Generator in ein Gussgehäuse eingebaut und sehr kompakt gestaltet. Eine derartige Ausgestaltung ist beispielsweise in der EP 0 811 764 B1 zu sehen. Die Sekundäraggregate, wie Hydraulik, Kühlung usw., sind dabei am Maschinenträger oder der Gondelverkleidung separat angebaut. Ein weiteres Beispiel aus dem Stand der Technik zeigt JP2013172535.

Diese Konstruktionen erfordern also bei der Errichtung, Wartung und Reparatur ihrer Komponenten einen hohen Arbeits- und Zeitaufwand, der sich insbesondere bei Offshore-Windenergieanlagen aufgrund unbeständiger Witterungsbedingungen und insgesamt ungünstiger Arbeitsbedingungen negativ auswirkt.

Aufgabe der Erfindung ist es daher, eine kompakte Windenergieanlage zu schaffen, die schnell und einfach zu installieren und zu warten ist, wobei insbesondere auch eine aktive Kühlung für eine ausreichende Abfuhr der Verlustwärme der Triebstrangkomponenten vorgesehen sein soll.

Diese Aufgabe wird erfindungsgemäß durch die Windenergieanlage mit den Merkmalen von Anspruch 1 gelöst. Die Unteransprüche geben vorteilhafte Ausgestaltungen der Erfindung wieder.

Grundgedanke der Erfindung ist es, die aus dem Stand der Technik gemäß US 4,527,072 A bekannte "Einschub"-Anlage dahingehend weiterzuentwickeln, dass ein funktioneller Triebstrang in die zur Aufnahme des Triebstrangs vorbereitete Anlage eingeschoben werden kann, wobei durch die Kombination von Triebstrang und Einschubaufnahme, also dem Zylinder der Anlage ein geschlossener Kühlluftkreislauf entsteht.

Ziel der Erfindung ist es also, einen Triebstrang bestehend aus Rotor, Rotorlager, gegebenenfalls Getriebe und Generator zu schaffen, der sehr kompakt und leicht und damit kostengünstig ist und bei dem die äußeren Lasten nicht über diese Komponente übertragen werden, sondern der Triebstrang als eine Einheit in einen Zylinder, beispielsweise in ein tragendes Stahlrohr eingeschoben und frontseitig mit dem Rotorlager befestigt wird, sodass die Lasten dann über dieses Stahlrohr in die Tragstuktur, also den Turm eingeleitet werden.

Das Getriebe, sofern vorhanden, ist dabei nur sehr wenig, der Generator gar nicht von den äußeren Lasten belastet.

Die Verbindung zwischen der Triebstrangeinheit und dem Zylinder wird dabei bevorzugt mit den Befestigungsschrauben des Außenringes des Rotorlagers vorgenommen. Der Generator wird dabei stirnseitig direkt am Rückwanddeckel des Getriebes oder des Rotorlagers befestigt, so dass sich der Generator bei etwaigen Deformationen des Getriebes oder des Rotorlagers ohne innere Belastungen frei mitbewegen kann.

Für die weitere Erklärung wird davon ausgegangen, dass der Triebstrang einen Generator aufweist, wenngleich die Erfindung auch auf getriebelose Windenergieanlagen Anwendung finden kann.

Der Zylinder kann als Kreiszylinder ausgebildet und insbesondere als einfaches zylindrisches gewalztes Stahlrohr hergestellt sein, das kopfseitig zum Rotorlageranschluss einen Flansch aufweist. Geometrisch aufwändige Schweißkonstruktionen aus einer Vielzahl von Blechen oder komplizierte Gussteile mit aufwändiger (Nach-) Bearbeitung sind also nicht notwendig.

Der Zylinder kann aber auch eine andere Grundfläche, beispielsweise ein Viereck oder ein Sechseck aufweisen. Die Längsachse des Zylinders ist dabei quer zur Längsachse des Turms ausgerichtet, kann also senkrecht zur Längsachse des Turms angeordnet sein oder insbesondere zwischen 0° und 30° von der Senkrechten zur Längsachse abweichen.

Ferner wird bei der erfindungsgemäßen Windenergieanlage die Kühlung von Generator und Getriebe mit einem mit Außenluft gekühlten Luft/Luft-Wärmetauscher vorgenommen, der an dem der Triebstrangeinheit gegenüberliegenden Ende des Zylinders angeordnet ist. Der innere Kühlluftstrom übernimmt die Verlustwärme vom Generator direkt durch den luftdurchströmten Stator und/oder Rotor des Generators. Diesem internen Luftstrom wird dann auch die Verlustwärme des Getriebes, bevorzugt über einen Öl/Luft-Wärmetauscher, zugeführt - entweder vor oder bevorzugt hinter dem Generator. Der interne Luftstrom wird dann vorzuzugsweise zunächst außen am Zylinder, also im Zylinderzwischenraum zwischen der Innenwandung des Zylinders und der Außenwandung des Innenzylinders geführt, um bei hohem Temperaturniveau die Wandung des Zylinders zur Kühlung mitzubenutzen. Danach strömt die Luft durch einen von der Haube gebildeten Luft/Luft-Plattenwärmetauscher, der sich an der äußeren Seite im Außenluftstrom befindet.

Zylinder und Innenzylinder sind also als Hohlzylinder ausgebildet.

Insbesondere sind der Zylinder und die Haube als separate Elemente ausgebildet, die miteinander verschraubt werden. Insbesondere kann hierfür vorgesehen sein, dass der Zylinder einen Haubenabschnitt durch Einschieben eines verjüngten Haubenabschnitts in den Zylinder aufnimmt.

Vorzugsweise ist die gesamte Anlage als Leeläufer ausgestattet, damit sich der von der Haube gebildete Plattenwärmetauscher entgegen der Luftströmung erstreckt und damit direkt in der Zuluft der Luftströmung befindet.

Der Plattenwärmetauscher besteht dabei aus dünnen vorzugsweise rostfreien Edelstahlblechen, die radial um den Innenzylinder, im Folgenden auch "zentrales inneres Luftleitungsrohr" genannt, angeordnet sind und abwechselnd entweder durchlässig mit dem Innenzylinder ausgeführt oder für den Außenkühlstrom geschlossen ausgeführt sind. Dadurch wird der innere Kühlluftstrom jeweils zwischen zwei Blechen von außen zum Innenzylinder geführt. Jeweils dazwischen kann die Außenluft vorbeistreichen, um die Wärme von innen nach außen abzuführen.

Auch der Innenzylinder kann, wie für den Zylinder zuvor erläutert, von einer Ausgestaltung als Kreiszylinder mit einer kreisrunden Grundfläche abweichend eine andere Grundfläche, beispielsweise ein Viereck oder ein Sechseck, aufweisen.

Um die auftretende Verlustwärme von ca. 3 % der elektrischen Leistung abführen zu können, wird eine Vielzahl von Blechpaaren benötigt. Die Gesamtoberfläche der Kühlbleche ergibt sich aus der Anlagenleistung, der Wirkungsgrade, den Außentemperaturbedingungen und der maximal erlaubten Innentemperatur.

Auch diese Kühleinheit kann von außen her als Baugruppe in den Zylinder eingeschoben werden und vorzugsweise mit einer Flanschverbindung mit dem Zylinder verbunden werden. In dem Zylinder sind dann vorher der Innenzylinder mit geeigneter Luftführung und Öl/Luftkühlsysteme zur Getriebeölkühlung, sowie ein oder mehrerer Gebläse zur Luftumwälzung eingebaut.

Besonders vorteilhaft ist diese gesamte Anordnung, wenn, wie z.B. bei einer schwimmenden Windenergieanlage, kein Windnachführsystem an der Gondel erforderlich ist. In diesem Fall kann der Zylinder direkt mit dem Turm oder der Tragstruktur verbunden werden.

Diese Konfiguration ist nicht nur sehr leicht und kompakt, wobei die äußeren Lasten vom Getriebe und Generator fern gehalten werden, sondern es wird auch ein geschlossener Kühlkreislauf geschaffen, der hermetisch von der Außenluft abgeschlossen ist. Dieses ist vor allem für Offshore-Anlagen zwingend erforderlich.

Erfindungsgemäß ist also eine Windenergieanlage mit einem Turm, einem Triebstrang, der einen Rotor, ein Rotorlager, vorzugsweise ein Getriebe und einen Generator aufweist, einem sich mit seiner Längsachse quer zur Längsachse des Turms erstreckenden, den Triebstrang auf seiner einen Seite abschnittsweise aufnehmenden Zylinder, und einer den Zylinder auf seiner anderen Seite verschließenden Haube, wobei der Triebstrang Mittel zur Kühlluftführung zwischen seiner dem Rotor gegenüberliegenden Stirnseite und seiner Mantelfläche aufweist, der Zylinder einen vorzugsweise konzentrisch angeordneten Innenzylinder aufweist, der den Innenraum des Zylinders in einen äußeren Zylinderzwischenraum und einen inneren Zylinderinnenraum unterteilt, die Haube als Luft/Luft-Wärmetauscher ausgebildet ist, und wobei der Innenzylinder unter Ausbildung eines geschlossenen Kühlkreislaufs mit der dem Rotor gegenüberliegenden Stirnseite des Triebstrangs und der Haube kommunizierend verbunden ist.

Bevorzugt ist der Zylinder drehfest auf dem Turm angeordnet. Besonders bevorzugt weist der Turm dabei einen linsen- bis tropfenförmigen Querschnitt auf, der die Windnachführung unterstützt.

Insbesondere entspricht die Querschnittsfläche des Innenzylinders in etwa der Querschnittsfläche des Zylinderzwischenraums, sodass im gesamten Kühlkreislauf eine gleichbleibende Luftströmung bzw. Luftströmungsgeschwindigkeit erreicht wird.

Nach einer weiteren bevorzugten Ausgestaltung weist der Innenzylinder einen sich in Richtung des Triebstrangs konisch erweiterten Abschnitt auf. Dieser Abschnitt vereinfacht die Anbindung des Innenzylinders an den Triebstrang, insbesondere Generator, an dessen Rückwand weitere kühlbedürftige Elemente, wie z.B. Gleichrichter, angeordnet sein können.

Weiter ist bevorzugt vorgesehen, dass der Innenzylinder die den Rotor gegenüberliegende Stirnseite des Triebstrangs, also die Generatorrückwandung umschließt. Hierfür ist besonders bevorzugt vorgesehen, dass der Außendurchmesser des Generators geringer als der Außendurchmesser des Getriebes ist.

Der Außendurchmesser des Getriebes entspricht insbesondere in etwa dem Außendurchmesser des Zylinders.

Die Luftzirkulation kann einerseits durch den Eigenlüfter des Generators bewirkt werden. Besonders bevorzugt ist jedoch ein im Innenzylinder angeordneter Ventilator vorgesehen. Alternativ oder zusätzlich können auch ein oder mehrere Ventilatoren im Zylinderzwischenraum vorgesehen sein.

Schließlich ist - wie oben genannt - bevorzugt vorgesehen, dass die Windenergieanlage als Lee-Läufer ausgebildet.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine schematische Seitenansicht einer besonders bevorzugt ausgestalteten Windenergieanlage;
- Fig. 2: eine Explosionsdarstellung der in Fig. 1 dargestellten Windenergieanlage;
- Fig. 3: eine geschnittene Seitenansicht der Windenergieanlage aus Fig. 1;
- Fig. 4: eine geschnittene Seitenansicht der Windenergieanlage aus Fig. 1 mit der schematisch dargestellten Luftzirkulation;
- Fig. 5: eine perspektivische Gesamtansicht einer besonders bevorzugt ausgestalteten schwimmenden Offshore-Windenergieanlage;

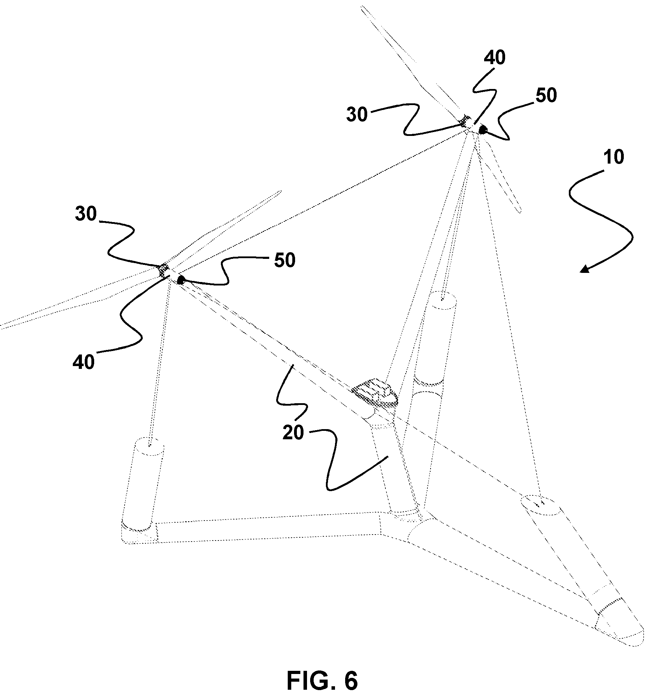

- Fig. 6: eine perspektivische Gesamtansicht einer weiteren besonders bevorzugt ausgestalteten schwimmenden Offshore-Windenergieanlage; und
- Fig. 7: eine Detailansicht der in Fig. 6 dargestellten Windenergieanlage im Bereich des einen Rotors.

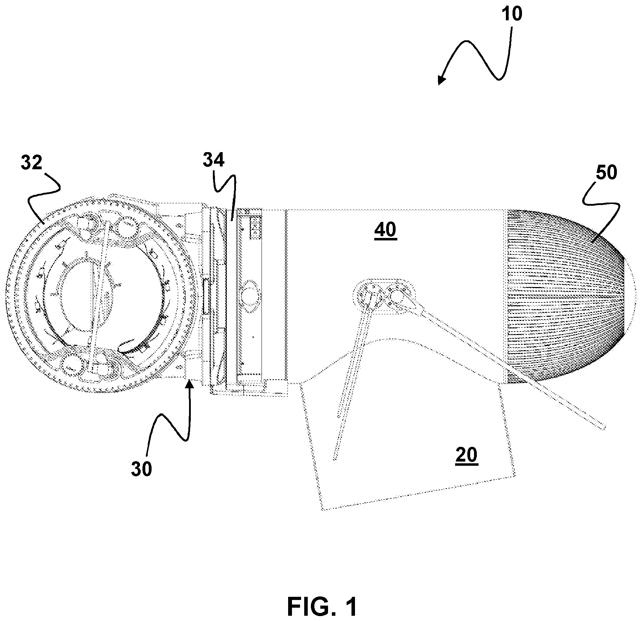

Fig. 1 zeigt eine schematische Seitenansicht einer besonders bevorzugt ausgestalteten Windenergieanlage.

Die Windenergieanlage 10 weist einen Turm 20 mit einem auf dessen Oberseite angeordneten Zylinder 40, der sich mit seiner Längsachse quer, im vorliegenden Beispiel etwa um 80° schräg zur Längsachse des Turms 20 erstreckt und den Triebstrang 30, von dem der Rotor 32, das Rotorlager 34 und das Getriebe 36 sichtbar sind, aufnimmt.

Auf der dem Triebstrang 30 gegenüberliegenden Seite ist eine den Zylinder 40 verschließende Haube 50 vorgesehen, die als Luft/Luft-Wärmetauscher ausgebildet ist und deren äußere Kühlrippen gut zu erkennen sind.

Die in Fig. 1 gezeigte Windenergieanlage ist insbesondere als schwimmende Leeläufer-Windenergieanlage ausgebildet, wobei der Zylinder 40 fest mit dem Turm 20 verbunden und dieser wiederum mit dem schwimmenden Fundament abgespannt ist. Hierfür ist insbesondere vorgesehen, dass die Abspannung nicht am Turm 20, sondern am Zylinder 40 angreift.

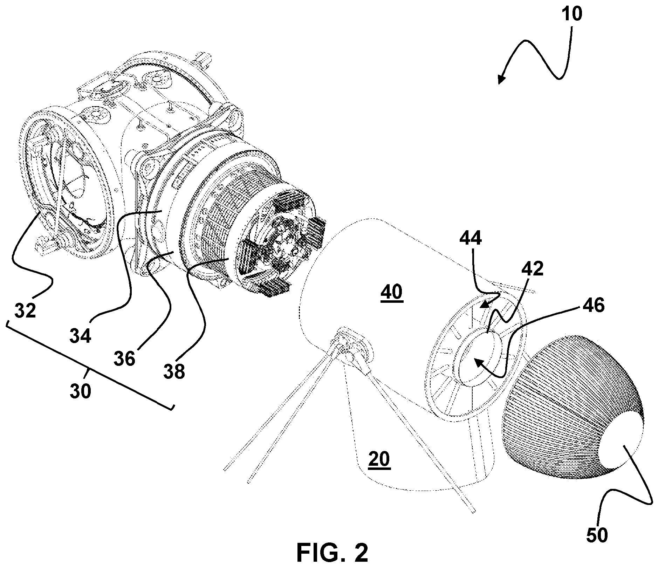

Fig. 2 zeigt eine Explosionsdarstellung der in Fig. 1 dargestellten Windenergieanlage.

Aus dieser Darstellung ist unmittelbar ersichtlich, dass ein funktioneller und insbesondere zuvor getesteter Triebstrang 30, der einen Rotor 32, ein Rotorlager 34, ein Getriebe 36 und einen Generator 38 aufweist, als funktionale Einheit in den Zylinder 40 auf dessen einer Seite eingeschoben werden kann, wobei die andere Seite des Zylinders 40 von der Haube 50 bedeckt ist.

Dabei sind der Turm 20, der Triebstrang 30, der Zylinder 40 und die Haube 50 so ausgebildet, dass bei Verbindung der Komponenten miteinander ein geschlossener Innenraum entsteht, der nicht im stofflichen Austausch mit der Umgebung steht.

Weiter ist in Fig. 2 zu erkennen, dass im Zylinder 40 ein konzentrisch zum Zylinder 40 angeordneter Innenzylinder 42 vorgesehen ist, der den Innenraum des Zylinders 40 in einen äußeren Zylinderzwischenraum 44 und einen inneren Zylinderinnenraum 46 unterteilt. Der Innenzylinder 42 ist insbesondere mittels radialer Stützstrukturen, die die Innenwandung des Zylinders 40 mit der Außenwandung des Innenzylinders 42 verbinden, am Zylinder 40 befestigt.

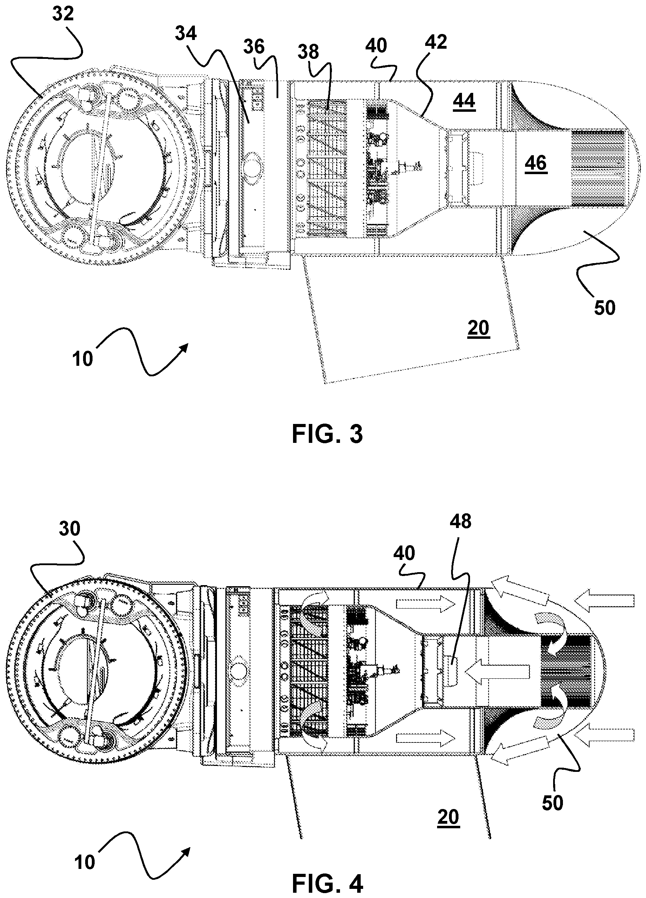

Fig. 3 zeigt nun eine geschnittene Seitenansicht der Windenergieanlage 10, sodass das funktionale Zusammenspiel zwischen Triebstrang 30, Zylinder 40, insbesondere Innenzylinder 42, und der Haube 50 deutlich wird.

Der Innenzylinder 42 ist nämlich so ausgestaltet, dass die den Rotor 32 gegenüberliegende Stirnseite des Triebstrangs, also die Rückwand des Generators 38 von der einen Seite des Innenzylinders 42 umfasst wird, sodass die Stirnseite des Triebstrangs 30 ausschließlich mit dem inneren Zylinderinnenraum 46, nicht aber direkt mit dem (äußeren) Zylinderzwischenraum 44 kommunizierend ausgebildet ist.

Auf der anderen Seite ist der Innenzylinder 42 mit den Leitungsstrukturen der als Luft/Luft-Wärmetauscher ausgebildeten Haube 50 kommunizierend verbunden, sodass ein geschlossener Kühlkreislauf zwischen dem Triebstrang 30 und der Haube 50 entsteht, der von der Haube 50 durch den inneren Zylinderinnenraum 46 zum Triebstrang 30 und vom Triebstrang 30 durch den Zylinderzwischenraum 44 zur Haube 50 geführt wird.

Der Kühlluftkreislauf ist durch die in Fig. 4 verwendeten Pfeile dargestellt. Dabei ist der innere Luftkreislauf vollkommen geschlossen ausgeführt. Die Verlustwärme wird an der Haube 50 durch die im Gegenstrom an der Haube 50 vorbeigeführte Außenluft abgeführt.

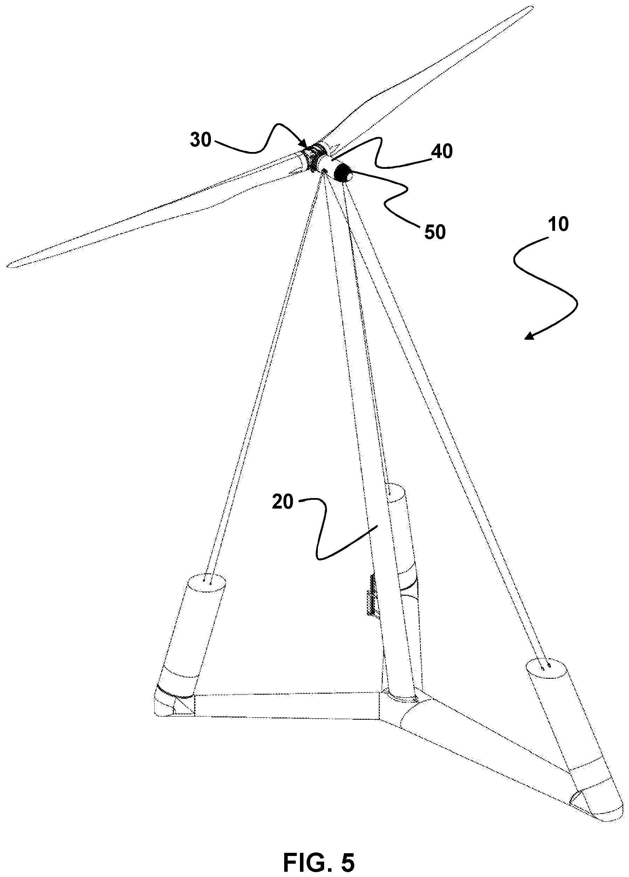

Schließlich zeigt Fig. 5 eine perspektivische Ansicht einer besonders ausgestalteten schwimmenden Windenergieanlage 10, mit einem auf einem schwimmenden Fundament angeordneten Turm 20. Der Turm 20 trägt auf seiner Oberseite einen drehfest mit dem Turm 20 verbundenen Zylinder 40, wobei der Turm 20 über am Zylinder 40 angeordnete Anschlagpunkte mit dem Fundament abgespannt ist.

Die schwimmende Windenergieanlage 10 ist insbesondere als Lee-Läufer ausgebildet, wobei der Turm 20 einen Querschnitt aufweist, der die Windnachführung wenigstens unterstützt.

Der Triebstrang 30 weist im gezeigten Ausführungsbeispiel einen Zweiblatt-Rotor auf und ist - wie zuvor erläutert - im Zylinder 40 aufgenommen, wobei der Zylinder 40 auf der dem Triebstrang 30 gegenüberliegenden Seite von einer Haube 50 verschlossen ist.

Fig, 6 zeigt ein weiteres Ausführungsbeispiel einer besonders bevorzugt ausgestalteten Windenergieanlage 10 mit einem auf einem schwimmenden Fundament angeordneten Turm 20. Der Turm 20 ist in einen vertikalen Abschnitt und zwei sich dichotom von diesem verzweigende Ausleger unterteilt, an deren Enden jeweils ein drehfest angeordneter Zylinder 40 vorgesehen ist.

Jeder dieser Zylinder 40 nimmt jeweils einen Triebstrang 30 auf, sodass eine schwimmende Windenergieanlage 10 geschaffen wird, die insgesamt zwei Triebstränge 30 aufweist. Dieses Vorgehen ist insbesondere für die Errichtung einer in Summe leistungsstarken Anlage vorteilhaft, bei der die Einzelanlagen nur gering dimensioniert sind und so eine bessere Lastverteilung auf dem schwimmenden Fundament ermöglichen.

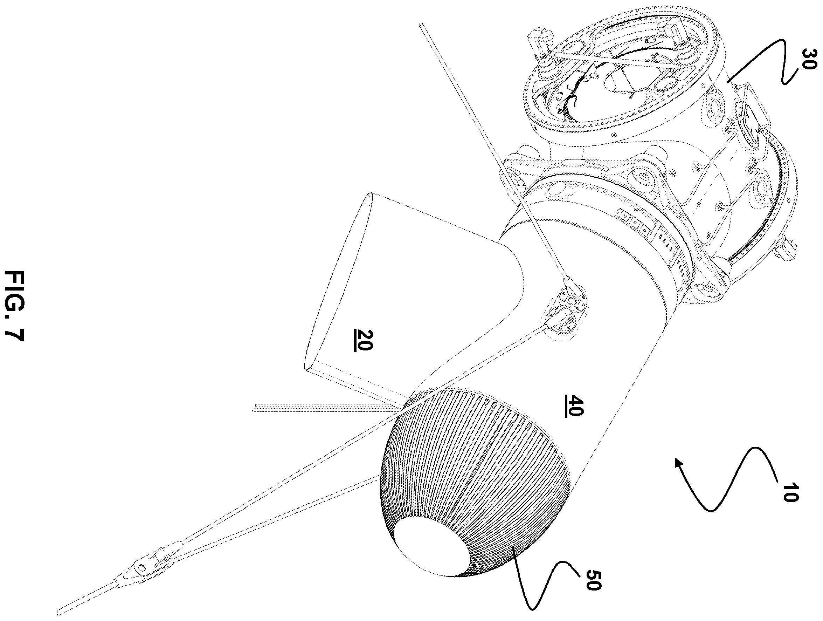

Fig. 7 zeigt schließlich ein Detail der Abspannungen im Bereich eines Triebstrangs 30. Hier ist deutlich zu erkennen, dass die Abspannseile am Tragrohr 40 befestigt sind, sodass ein Austausch des Triebstrangs 30 durchgeführt werden kann, ohne die Stabilität der schwimmenden Windenergieanlage 10 insgesamt zu beeinträchtigen.

## Patentansprüche

1. Windenergieanlage (10) mit
- einem Turm (20),
- einem Triebstrang (30), der einen Rotor (32), ein Rotorlager (34), vorzugsweise ein Getriebe (36) und einen Generator (38) aufweist,
- einem sich mit seiner Längsachse quer zur Längsachse des Turms (20) erstreckenden, den Triebstrang (30) auf seiner einen Seite abschnittsweise aufnehmenden Zylinder (40), und
- einer den Zylinder (40) auf seiner anderen Seite verschließenden Haube (50),
**dadurch gekennzeichnet, dass**
der Triebstrang (30) Mittel zur Kühlluftführung zwischen seiner dem Rotor (32) gegenüberliegenden Stirnseite und seiner Mantelfläche aufweist,
der Zylinder (40) einen Innenzylinder (42) aufnimmt, der den Innenraum des Zylinders (40) in einen äußeren Zylinderzwischenraum (44) und einen inneren Zylinderinnenraum (46) unterteilt,
die Haube (50) als Luft/Luft-Wärmetauscher ausgebildet ist,
wobei der Innenzylinder (42) unter Ausbildung eines geschlossenen Kühlkreislaufs mit der dem Rotor (32) gegenüberliegenden Stirnseite des Triebstrangs (30) und der Haube (50) kommunizierend verbunden ist.

2. Windenergieanlage (10) nach Anspruch 1, **dadurch gekennzeichnet, dass** der Zylinder (40) drehfest auf dem Turm (20) angeordnet ist.

3. Windenergieanlage (10) nach einem der vorhergehenden Ansprüche, **dadurch gekennzeichnet, dass** der Zylinder (40) und der Innenzylinder (42) zueinander konzentrisch angeordnet sind.

4. Windenergieanlage (10) nach einem der vorhergehenden Ansprüche, **dadurch gekennzeichnet, dass** die Querschnittsfläche des Innenzylinders (42) der Querschnittsfläche des Zwischenraums entspricht.

5. Windenergieanlage (10) nach einem der vorhergehenden Ansprüche, **dadurch gekennzeichnet, dass** der Innenzylinder (42) einen sich in Richtung des Triebstrangs (30) konisch erweiterten Abschnitt aufweist.

6. Windenergieanlage (10) nach einem der vorhergehenden Ansprüche, **dadurch gekennzeichnet, dass** der Innenzylinder (42) die den Rotor (32) gegenüberliegende Stirnseite des Triebstrangs (30) umschließt.

7. Windenergieanlage (10) nach einem der vorhergehenden Ansprüche, **dadurch gekennzeichnet, dass** sie ein Getriebe umfasst und der Außendurchmesser des Generators (38) geringer als der Außendurchmesser des Getriebes (36) ist.

8. Windenergieanlage (10) nach einem der vorhergehenden Ansprüche, **dadurch gekennzeichnet, dass** sie ein Getriebe umfasst und der Außendurchmesser des Getriebes (36) dem Außendurchmesser des Zylinders (40) entspricht.

9. Windenergieanlage (10) nach einem der vorhergehenden Ansprüche, **gekennzeichnet durch** einen im Innenzylinder (42) und/oder im Zylinderzwischenraum (44) angeordneten Ventilator (48).

10. Windenergieanlage (10) nach einem der vorhergehenden Ansprüche, **dadurch gekennzeichnet, dass** die Windenergieanlage (10) als Lee-Läufer ausgebildet ist.

## Claims

1. Wind turbine (10), comprising
- a tower (20),
- a drive train (30) which has a rotor (32), a rotor bearing (34), preferably a gearbox (36), and a generator (38),
- a cylinder (40), the longitudinal axis of which extends transversely to the longitudinal axis of the tower (20), and which, on one side thereof, partially houses the drive train (30), and
- a hood (50) which closes the cylinder (40) on the other side thereof,
**characterized in that** the drive train (30) has means for guiding cooling air between its end face that is opposite the rotor (32) and its lateral face, the cylinder (40) houses an inner cylinder (42) which divides the interior of the cylinder (40) into an outer cylinder gap (44) and an inner cylinder interior (46), and the hood (50) is designed as an air-to-air heat exchanger, the inner cylinder (42) being communicatively connected to the end face of the drive train (30) that is opposite the rotor (32) and to the hood (50), thus forming a closed cooling circuit.

2. Wind turbine (10) according to claim 1, **characterized in that** the cylinder (40) is arranged non-rotatably on the tower (20).

3. Wind turbine (10) according to either of the preceding claims, **characterized in that** the cylinder (40) and the inner cylinder (42) are arranged concentrically with respect to one another.

4. Wind turbine (10) according to any of the preceding claims, **characterized in that** the cross-sectional area of the inner cylinder (42) corresponds to the cross-sectional area of the gap.

5. Wind turbine (10) according to any of the preceding claims, **characterized in that** the inner cylinder (42) has a portion which widens conically in the direction of the drive train (30).

6. Wind turbine (10) according to any of the preceding claims, **characterized in that** the inner cylinder (42) encloses the end face of the drive train (30) that is opposite the rotor (32).

7. Wind turbine (10) according to any of the preceding claims, **characterized in that** it comprises a gearbox, and the outer diameter of the generator (38) is smaller than the outer diameter of the gearbox (36).

8. Wind turbine (10) according to any of the preceding claims, **characterized in that** it comprises a gearbox, and the outer diameter of the gearbox (36) corresponds to the outer diameter of the cylinder (40).

9. Wind turbine (10) according to any of the preceding claims, **characterized by** a fan (48) arranged in the inner cylinder (42) and/or in the cylinder gap (44).

10. Wind turbine (10) according to any of the preceding claims, **characterized in that** the wind turbine (10) is designed as a downwind turbine.

## Revendications

1. Éolienne (10) comportant
- un mât (20),
- un train de puissance (30) qui présente un rotor (32), un palier de rotor (34), de préférence un multiplicateur (36) et un générateur (38),
- un cylindre (40) dont l'axe longitudinal s'étend transversalement à l'axe longitudinal du mât (20) et qui reçoit le train de puissance (30) en sections sur l'une de ses faces, et
- un capot (50) fermant le cylindre (40) sur son autre face,
**caractérisée en ce que**
le train de puissance (30) présente des moyens servant à guider l'air de refroidissement entre sa face frontale opposée au rotor (32) et sa surface externe,
le cylindre (40) reçoit un cylindre intérieur (42) qui divise l'espace intérieur du cylindre (40) en un espace intermédiaire de cylindre extérieur (44) et un espace intérieur de cylindre intérieur (46),
le capot (50) est conçu comme un échangeur de chaleur air-air,
le cylindre intérieur (42) étant relié de manière communicante à la face frontale du train de puissance (30) opposée au rotor (32) et au capot (50) en formant un circuit de refroidissement fermé.

2. Éolienne (10) selon la revendication 1, **caractérisée en ce que** le cylindre (40) est disposé sur le mât (20) de manière solidaire en rotation.

3. Éolienne (10) selon l'une des revendications précédentes, **caractérisée en ce que** le cylindre (40) et le cylindre intérieur (42) sont disposés de façon concentrique l'un par rapport à l'autre.

4. Éolienne (10) selon l'une des revendications précédentes, **caractérisée en ce que** la surface de section transversale du cylindre intérieur (42) correspond à la surface de section transversale de l'espace intermédiaire.

5. Éolienne (10) selon l'une des revendications précédentes, **caractérisée en ce que** le cylindre intérieur (42) présente une section élargie de façon conique dans la direction du train de puissance (30).

6. Éolienne (10) selon l'une des revendications précédentes, **caractérisée en ce que** le cylindre intérieur (42) entoure la face frontale du train de puissance (30) opposée au rotor (32).

7. Éolienne (10) selon l'une des revendications précédentes, **caractérisée en ce qu'**elle comprend un multiplicateur et **en ce que** le diamètre extérieur du générateur (38) est inférieur au diamètre extérieur du multiplicateur (36).

8. Éolienne (10) selon l'une des revendications précédentes, **caractérisée en ce qu'**elle comprend un multiplicateur et **en ce que** le diamètre extérieur du multiplicateur (36) correspond au diamètre extérieur du cylindre (40).

9. Éolienne (10) selon l'une des revendications précédentes, **caractérisée par** un ventilateur (48) disposé dans le cylindre intérieur (42) et/ou dans l'espace intermédiaire de cylindre (44).

10. Éolienne (10) selon l'une des revendications précédentes, **caractérisée en ce que** l'éolienne (10) est réalisée sous la forme d'un rotor sous le vent.
